**Europäisches Patentamt**

**European Patent Office**

**Office européen des brevets**

(19)

(11) Veröffentlichungsnummer: **0 169 986**

**A2**

(12) # EUROPÄISCHE PATENTANMELDUNG

(21) Anmeldenummer: **85105603.6**

(22) Anmeldetag: **07.05.85**

(51) Int. Cl.⁴: **B 32 B 7/04**

(30) Priorität: **07.05.84 DE 3416753**

(43) Veröffentlichungstag der Anmeldung:
**05.02.86 Patentblatt 86/6**

(84) Benannte Vertragsstaaten:
**CH DE FR GB IT LI**

(71) Anmelder: **Nyffeler, Corti AG**

**CH-3422 Kirchberg BE(CH)**

(72) Erfinder: **Lamping, Alfons, Dr.**
**route de Combarod 5**
**CH-1711 Corminboeuf(CH)**

(72) Erfinder: **Hiltbrunner, Werner**
**Neufeldstrasse 134**
**CH-3000 Bern 26(CH)**

(74) Vertreter: **Barz, Peter, Dr. et al,**
**Patentanwälte Dr. V. Schmied-Kowarzik Dipl.-Ing. G.**
**Dannenberg Dr. P. Weinhold Dr. D. Gudel Dipl.-Ing. S.**
**Schubert Dr. P. Barz Siegfriedstrasse 8**
**D-8000 München 40(DE)**

(54) **Verbundfolie mit plastischem Biegeverhalten.**

(57) Eine Verbundfolie mit plastischem Biegeverhalten ist dadurch gekennzeichnet, daß sie zwei oder mehr Verbundschichten mit dazwischen vorgesehenen Klebstoffschichten aufweist, wobei die Klebstoffschichten durch ihr rheologisches Verhalten die Rückstellkräfte der Verbundschichten nach dem Biegen der Folien aufnehmen, ohne sich von diesen Kräften verformen zu lassen. Zu diesem Zweck eignen sich Klebstoffschichten aus druckempfindlichen Haftklebern mit einer Schichtdicke von z.B. 0,005 bis 0,1 mm. Die Verbundschichten bestehen z.B. aus Aluminium, Kunststoffen oder Papier.

EP 0 169 986 A2

Verbundfolie mit plastischem Biegeverhalten

Die Erfindung betrifft eine Verbundfolie mit nahezu ideal-plastischem Biegeverhalten, die nach der Biegeverformung praktisch keine Rückfederung aufweist. Derartige Folien sind unter anderem in der Verpackungswirtschaft zum Einwickeln von Gegenständen mit verschiedensten geometrischen Formen, vorzugsweise solchen mit unregelmäßigen Körperformen, erforderlich.

Folien mit ideal-plastischem Biegeverhalten sind kaum herstellbar, allenfalls kommen gewalzte Zinn- oder Bleifolien und einige sehr weich eingestellte Kunststoff-Compound-Folien diesem Idealziel nahe. Wenn eine solche Folie um einen Gegenstand gewickelt und angepreßt wird, verbleibt sie in dieser Form, ohne daß sich die freien Enden durch Rückfederung vom Gegenstand wieder abheben, sobald die Anpreßkraft zu wirken aufhört.

Mit Folien aus den genannten Materialien können aber aus verschiedenen Gründen nicht alle Erfordernisse des technischen Bedarfs erfüllt werden, teils wegen ihres hohen Preises, teils aus toxikologischen oder sonstigen Gründen.

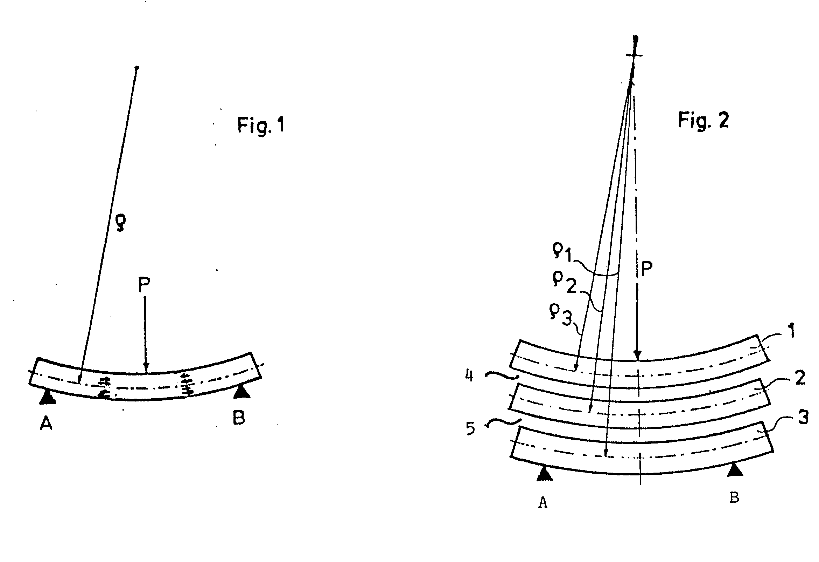

Das Biegeverhalten üblicher Mehrschichtfolien entspricht dem bekannten Modell eines Stabes mit rechteckigem Querschnitt; siehe Fig. 1. Dabei stellt man sich den Querschnitt aus einer unendlichen Anzahl einzelner, unendlich dünner Faserschichten bestehend vor. Wird beim Biegeversuch ein solcher Stab auf zwei Stützen A und B aufgelegt und mit einer Kraft P belastet, so werden die einzelnen Faserschichten des durchgebogenen Stabes wie folgt beansprucht: die Faserschicht in der Querschnittsmitte wird nicht beansprucht; die einzelnen Schichten oberhalb dieser neutralen Schicht werden in Querrichtung zur angreifenden Biegekraft auf Druck beansprucht, also gestaucht; gleichzeitig werden die Faserschichten unterhalb der neutralen Schicht in Querrichtung zur angreifenden Biegekraft auf Zug beansprucht, also gedehnt. Im Bereich des Hooke'-schen Gesetzes steht die Durchbiegung des Stabes in proportionalem Verhältnis zur angreifenden Biegekraft. Wird die Biegekraft erhöht, wird der Stab zunächst bleibend, also plastisch verformt und kann dann, je nach Bruchverhalten und Stabdicke, sogar brechen.

Übliche Folien, wie sie für Verpackungszwecke verwendet werden, lassen sich um 180° umbiegen, ohne zu brechen. In der Regel bleibt aber nach dem Umbiegen ein Rest von Elastizität übrig, der beim Nachlassen der Biegekraft bewirkt, daß die freien Enden der Folie teilweise in Richtung der Ausgangslage zurückfedern. Dies ist im allgemeinen ein unerwünschter Effekt und es ist Aufgabe der Erfindung eine Verbundfolie bereitzustellen, die nach erfolgter Biegung in ihrem gebogenen Zustand fixiert bleibt und kein Rückfederungsbestreben zeigt.

Gegenstand der Erfindung ist eine Verbundfolie mit plastischem Biegeverhalten, die dadurch gekennzeichnet ist, daß sie zwei oder mehr Verbundschichten mit dazwischen vorgesehenen Klebstoffschichten aufweist, wobei die Klebstoffschichten durch ihr rheologisches Verhalten die Rückstellkräfte der Verbundschichten nach dem Biegen der Folie aufnehmen, ohne sich von diesen Kräften verformen zu lassen.

Im Falle der Verwendung von drei Verbundschichten ist die erfindungsgemäße Folie vergleichbar mit dem in Fig. 2 dargestellten Blattfederpaket. Zur besseren Verständlichkeit sind die einzelnen Blattfedern 1, 2 und 3 nicht direkt aufeinanderliegend dargestellt. Das Federpaket ist auf die Punkte A und B aufgestützt und es wirkt eine Biegekraft P auf die Federn ein. Für jeden Federstab 1, 2, 3 gilt das für den einzelnen Stab von Fig. 1 Gesagte. Unter sich sind die einzelnen Federstäbe 1, 2, 3 aber frei beweglich. Dies bewirkt beim Biegevorgang eine quer zur einwirkenden Kraft gerichtete Relativbewegung je zweier benachbarter Grenzflächen. Damit ergibt sich für jeden einzelnen Federstab 1, 2, 3 ein besonderer Biegeradius $\rho 1$, $\rho 2$, $\rho 3$.

Die bisher üblicherweise für Verpackungszwecke eingesetzten Mehrschichtfolien weisen Merkmale sowohl des in Fig. 1 dargestellten homogenen Federstabes als auch des in Fig. 2 dargestellten Federpaketes auf. Die Folien sind aufgebaut aus mehreren Verbundkomponenten 1, 2, 3, die gewöhnlich aus unterschiedlichen Werkstoffen bestehen. Wesentlich ist, daß diese Einzelschichten 1, 2, 3 üblicherweise fest miteinander verbunden sind, sei es, daß sie durch Koextrusion direkt aneinander haftend hergestellt oder durch nachträgliches Verkleben verbunden werden. Diese starre Verbindung verhindert aber ein ideal-plastisches Biegeverhalten; sie ist im Gegenteil einem weitgehend elastischen Biegeverhalten förderlich.

Demgegenüber wird erfindungsgemäß das gewünschte idealplastische Biegeverhalten dadurch erzielt, daß man Verbundschichten 1, 2, 3 mit Klebstoffschichten 4, 5 verbindet, die folgende rheologische Bedingungen erfüllen:

1. Sie sollen nach dem Laminierungsprozeß ein möglichst ideal-plastisches Verhalten aufweisen, wobei die Rückfederungskraft der Verbundschichten 1, 2, 3 nicht ausreichen darf, um die Fließgrenze der Klebstoffschichten 4, 5 zu überwinden;

2. Das viskoelastische Verhalten muß so sein, daß bei gleichbleibender Spannung durch die Rückfederungskraft der Verbundschichten 1, 2, 3 eine Entspannung der Klebstoffschichten 4, 5 ohne äußere Formänderung der Folie möglich ist.

Um diese beiden Forderungen zu erfüllen, muß die Dicke der Klebstoffschichten 4, 5 so gewählt werden, daß falls ihre Randpartien einer geringen Scherverformung unterliegen, nicht die gesamte Klebstoffschicht und damit die ganze Folie mit verformt wird.

Vorzugsweise haben die Klebstoffschichten 4, 5 eine solche Schichtdicke, daß das durch die Rückstellkräfte der Verbundschichten 1, 2, 3 hervorgerufene Schergefälle in der mittleren Zone jeder Klebstoffschicht Null beträgt. Im allgemeinen liegt die Schichtdicke der Klebstoffschichten im Bereich von 0,005 bis 0,1 mm, vorzugsweise 0,005 bis 0,030 mm.

Außer den genannten rheologischen Eigenschaften müssen die Klebstoffschichten auch genügend Haftung an den Verbundschichten und Kohäsion aufweisen, um die Verbundschichten so fest miteinander zu verbinden, daß keine unbeabsichtigte Delamination erfolgt. Gegebenenfalls werden die Oberflächen der Verbundschichten vor oder während des Laminationsprozesses vorbehandelt, z.B. mittels Corona-Entladung.

Die chemische Zusammensetzung der Klebstoffschichten sowie das Laminationsverfahren und die zu applizierenden Klebstoffmengen variieren in Abhängigkeit von den jeweils verwendeten Verbundschichten und dem beabsichtigen Verwendungszweck.

Als Klebstoffe eignen sich übliche druckempfindliche Klebstoffe, z.B. Acrylatkleber oder Kleber auf Basis von thermoplastischen Kautschuken. Ungeeignet sind die normalerweise für Verbundfolien verwendeten Kaschierkleber auf Polyurethanbasis, da sie zu harte und spröde Verklebungen ergeben. Der Auftrag der Klebstoffe kann erfindungsgemäß z.B. aus Lösung, Dispersion oder aus der Schmelze erfolgen.

Als Materialien für die Verbundschichten eignen sich erfindungsgemäß z.B. Aluminium-, Polyester-, Polycarbonat-, Polystyrol- oder Zellglasfolien oder Papier. Hierbei sind Aluminiumfolien und die genannten Kunststoffolien, die gegebenenfalls metallisiert (z.B. aluminiumbedampft) sein können, bevorzugt.

Die Schichtdicke der Verbundschichten beträgt im Falle von Aluminium- und Kunststoffolien im allgemeinen 0,006 bis 0,05 mm, vorzugsweise 0,007 bis 0,02 mm; im Falle von Papier liegt das Flächengewicht üblicherweise im Bereich von 10 bis 50 g/m², vorzugsweise 15 bis 30 g/m². Gewöhnlich werden zwei oder drei derartige Verbundschichten verwendet, die aus gleichen oder verschiedenen Materialien bestehen können.

Die erfindungsgemäßen Verbundfolien, insbesondere solche aus Aluminium, eignen sich z.B. zum Umwickeln eines Flaschenhalses (sogenanntes Stanniolieren) für dekorative Zwecke. Hierbei erübrigt sich das bisher notwendige Ankleben der Folie an den Flaschenhals, da sich die Folie durch das manuelle oder maschinelle Umwickeln glatt an den umwickelten Körper anlegt. Dies ist z.B. für das Flaschen-Recycling von Vorteil.

Die Außenfläche der erfindungsgemäßen Verbundfolie kann lakkiert, gefärbt oder bedruckt werden. Im Falle von Verbundschichten aus Aluminium können eine oder mehrere dieser Schichten darüber hinaus vor oder nach dem Verkleben geprägt werden. Eine Prägung hat sowohl Einfluß auf das Aussehen als auch auf das Biegeverhalten, wobei dieses je nach Prägemuster und Prägetiefe in der Regel im erfindungsgemäßen erwünschten Sinne beeinflußt wird.

Beispiel

Eine Folie aus weichem Reinaluminium im Dickenbereich von 0,006 bis 0,05 mm wird mit einer wäßrigen, feindispersen, weichmacherfreien, anionaktiven Dispersion eines carboxylgruppen-haltigen Acrylsäure/Acrylnitril-Copolymerisats beschichtet und anschließend unter Wärmeeinwirkung getrocknet.

Nach dem Trocknen wird im gleichen Arbeitsgang eine zweite Folie aus weichem Reinaluminium im Dickenbereich von 0,006 bis 0,05 mm zugeführt, auf die angetrocknete Dispersionsschicht gelegt und unter Zusammenpressen zwischen einem Walzenpaar mit der beschichteten ersten Aluminiumfolie verklebt.

**Patentansprüche**

1. Verbundfolie mit plastischem Biegeverhalten, dadurch g e k e n n z e i c h n e t , daß sie zwei oder mehr Verbundschichten mit dazwischen vorgesehenen Klebstoffschichten aufweist, wobei die Klebstoffschichten durch ihr rheologisches Verhalten die Rückstellkräfte der Verbundschichten nach dem Biegen der Folie aufnehmen, ohne sich von diesen Kräften verformen zu lassen.

2. Verbundfolie nach Anspruch 1, dadurch gekennzeichnet, daß die Schichtdicke der Klebstoffschicht(en) so gewählt ist, daß das durch die Rückstellkräfte der Verbundschichten hervorgerufene Schergefälle in der mittleren Zone jeder Klebstoffschicht Null beträgt.

3. Verbundfolie nach Anspruch 2, dadurch gekennzeichnet, daß die Schichtdicke der Klebstoffschicht(en) 0,005 bis 0,1 mm beträgt.

4. Verbundfolie nach Anspruch 3, dadurch gekennzeichnet, daß die Schichtdicke der Klebstoffschicht(en) 0,005 bis 0,030 mm beträgt.

5. Verbundfolie nach einem der Ansprüche 1 bis 4, dadurch gekennzeichnet, daß die Klebstoffschicht(en) aus einem druckempfindlichen Klebstoff bestehen.

6. Verbundfolie nach einem der Ansprüche 1 bis 5, dadurch gekennzeichnet, daß sie zwei oder drei Verbundschichten aufweist.

7. Verbundfolie nach einem der Ansprüche 1 bis 6, dadurch gekennzeichnet, daß die Verbundschichten aus Aluminium-, Polyester-, Polycarbonat-, Polyamid-, Polystyrol- oder Zellglasfolien oder Papier bestehen.

8. Verbundfolie nach Anspruch 7, dadurch gekennzeichnet, daß die Schichtdicke der Aluminium- oder Kunststofffolien 0,006 bis 0,05 mm und das Flächengewicht des Papiers 10 bis 50 g/m² beträgt.

9. Verbundfolie nach Anspruch 8, dadurch gekennzeichnet, daß die Schichtdicke der Aluminium- oder Kunststofffolien 0,007 bis 0,02 mm und das Flächengewicht des Papiers 15 bis 30 g/m² beträgt.

10. Verbundfolie nach einem der Ansprüche 1 bis 9, dadurch gekennzeichnet, daß die Verbundschichten aus Aluminiumfolien bestehen, die gegebenenfalls vor oder nach dem Verkleben geprägt worden sind.

Fig. 1

Fig. 2

0169986